# EUROPEAN PATENT APPLICATION

(11) **EP 4 624 203 A2**
(43) Date of publication of application: **01.10.2025**
(21) Application number: 25183693.8
(22) Date of filing: 17.11.2023
(51) Int. Cl.: B60G 3/18

(54) **SUSPENSION MEMBER AND POWER WHEELCHAIR THEREWITH**

(30) Priority: 17.11.2022 US 202263426191 P; 13.12.2022 US 202263432240 P
(62) Divisional of application: 23892671.1
(71) Applicant: Sunrise Medical (US) LLC, Fresno, CA 93727 (US)
(72) Inventor: TRAXINGER, Samuel D., Fresno, 93727 (US); SOUTHARD, Sandra L., Fresno, 93727 (US); BASHIAN, Jefferey, Fresno, 93727 (US); HOOPER, Dennis, Fresno, 93727 (US); KRAMER, Markus, 69254 Malsch (DE)
(74) Representative: Weber-Bruls, Dorothée

(57) **Abstract**

A power wheelchair includes a frame, a powertrain including a motor, gearbox, and powertrain suspension coupled to a drive wheel. The powertrain suspension includes a powertrain mount connected to the motor. The mount is pivotally connected to and resiliently supported by an upper link and a lower link for movement of the drive wheel relative to the frame. The power wheelchair further includes a base suspension connected between the frame and the caster support arms. The base suspension is dynamically controllable to vary caster suspension movements in response to sensor outputs to reduce pitching motions.

## Description

This invention relates in general to power driven wheelchairs and, in particular, to a suspension member and a power wheelchair chassis. A wheelchair powertrain and suspension system may have selectable control elements to improve ride and maneuverability. In certain embodiments, the power driven wheelchair has an integrated motor and gearset, including a four-bar suspension for jounce and rebound movements. In certain other embodiments, the power driven wheelchair includes a controllable inertia dampened suspension element that converts linear motion to rotational motion. In certain other embodiments, the power driven wheelchair includes a microprocessor-based control system that measures wheelchair operational parameters and creates suspension and/or motor response outputs to improve ride and maneuverability of the power driven wheelchair.

Conventional power driven wheelchairs use electric motors or electric motors and gearboxes for propulsion in response to user drive command inputs, typically from a joystick or other input device. For many mid- wheel drive power wheelchairs, the motor and gearbox assembly is often fixed or pivotally mounted to a frame structure or to front and/or rear caster mounting arms to move in response to contact with obstacles by the caster wheels. These motor/gearbox assemblies often use worm drive gearsets between the motor and drive wheel, which aids in eliminating back-driving when stopped. These conventional powertrains, however, tend to be bulky and difficult to package. The pivoting mounting arrangement also has limited vibration isolation, making for increased perceptions of noise, vibration, and harshness (NVH) during operation.

In addition, power wheelchair suspensions, isolation systems, and drive systems currently rely on conventional resilient members, such as springs, and linear dampers, such as shock absorbers, to smooth ride characteristics over uneven terrain. Traditional suspensions provide fixed characteristics of suspension members that are a compromise between shock input isolation (creating a smooth, comfortable ride) and handling and performance operation (creating a responsive but stiff and somewhat jarring ride characteristic). Certain suspension systems attempt to mitigate this compromise by providing suspension members that can vary or adjust their operative parameters (such as stiffness, displacement, or damping) during use in response to a control signal. In wheelchair suspension applications, the ability of the suspension to control the attitude of the seating system when traversing uneven terrain is a primary design consideration.

Attempts have been made to lock the position of a front or rear caster arm during obstacle encounters, such as a curb, to prevent creating significant tipping sensations. In conjunction with conventional spring/damper systems, these suspension locks may actuate abruptly causing undesired inputs to the seated user. What is needed is a suspension system that offers a range of energy dissipation and the ability to lock and unlock linear motion without abrupt transitions.

Controllable wheelchair suspensions rely on sensors to measure speed, acceleration, and/or attitude inputs to generate a control signal that modifies suspension characteristics. This control signal typically measures the effects of a suspension event as it begins to occur and attempts to adjust the suspension member parameter to compensate for the effects of the event. The reactive control of suspension members results in an appreciable delay between a suspension actuation event caused by the terrain or operating conditions and a suspension response. This delay is particularly noticeable for suspension actuators that operate in an on-off mode. It would be desirable to provide a control system that considers non- suspension inputs to anticipate a suspension event and preemptively adjust a suspension member characteristic.

US 2021/10259898 A1 refers to a wheelchair and suspension system. The suspension includes a drive assembly that is pivotably connected to a base frame at multiple locations. In one embodiment, the connection is via intermediary pivoting links or arms. Embodiments of the links or arms including rigid links, resilient links, elastic links, shocks, springs, gas cylinders and lockable gas cylinders (or combinations of the foregoing). The drive assembly can, via the pivot connections, pivot to accommodate and traverse variations and obstacles on ground surfaces.

A wheelchair suspension system according to US 6.234.507 B1 includes suspension members that interact to cause a positive movement of the suspension members to urge the drive wheels into contact with the ground. The resilient suspension system comprises a drive wheel suspension member for supporting a drive wheel and a front wheel suspension member for supporting a front wheel. The drive wheel suspension member and the front wheel suspension member are each adapted to be movably attached to the wheelchair frame. Each suspension member cooperates with a resilient element to resist movement of the suspension members relative to the frame. The suspension members are adapted to cooperate with each other in response to movement of the suspension members relative to the frame to urge the drive wheel into contact with the ground.

### SUMMARY OF THE INVENTION

It is an object of the present invention to provide a suspension member for a power wheelchair overcoming the drawbacks of the prior art.

This object is solved by claim 1. Preferred embodiments of the present invention are described in claims 2 to 7.

It is a further object of the present invention to provide a power wheelchair chassis overcoming the drawbacks of the prior art.

This object is solved by claim 8. Preferred embodiments of the present invention are described in claims 9 to 17.

Still further, power driven wheelchairs with a power wheelchair chassis, in particular, having a power wheelchair powertrain system and suspension system with an improved ride and handling response to traversing non-uniform terrain are decribed. The power driven wheelchair may further include an improved suspension member having and inertia dampening capability that can be modulated by a control system having one or more dynamic wheelchair status inputs. The power driven wheelchair may further include an integrated motor and gearset supported by a motor and drive wheel suspension, configured as a four-bar linkage or a linear slide and bumper arrangement for accommodating jounce and rebound movements.

In certain embodiments of a power wheelchair chassis include a frame, a powertrain having a motor coupled to a drive wheel, and a suspension connected between the frame and the motor. The suspension is a powertrain suspension that includes a powertrain mount connected to the motor and pivotally connected to an upper link and a lower link. The upper and lower links are pivotally supported on the frame and resiliently supported for movement of the drive wheel relative to the frame. The powertrain includes a gearbox driven by the motor, and the gearbox has a drive hub connected to the drive wheel. In certain embodiments of the invention, the gearbox is connected to the motor by a common housing. One aspect of the invention provides the gearbox to have a radial offset relative to a motor output shaft such that the powertrain defines an outer envelope that is smaller in diameter than a drive wheel rim diameter.

In another embodiment of a power wheelchair chassis having a frame, powertrain and powertrain suspension, the motor includes a motor output shaft supporting a drive pinion that engages a drive gear within the gearbox. In one aspect, the drive pinion and drive gear define a single gear ratio. In several embodiments, upper and lower links of the powertrain suspension are pivotally connected to the frame by mounting tabs. A resilient member applies a load between the upper links and the mounting tabs as the powertrain moves relative to the frame. Additionally, certain embodiments include a resilient member that applies a load between the lower links and the mounting tabs as the powertrain moves relative to the frame. The resilient member may be configured as an elastomeric cylinder and the upper and lower links include a barrel seat that supports the resilient member. In one aspect, the resilient member is an elastomeric cylinder loaded in compression between the links and the mounting tabs.

In one alternative embodiment, the power wheelchair chassis includes a frame, powertrain, and powertrain suspension configured for substantially vertical movement of the powertrain in response to terrain discontinuities. The powertrain suspension, connected between the frame and the motor, includes a powertrain mount configured for sliding movement relative to a suspension rod. In one aspect, the suspension rod is supported by a suspension lab fixed on the frame. A resilient member is disposed between the suspension tab and the powertrain mount to apply support forces in response to movement of the drive wheel relative to the frame.

In another embodiment, a base suspension supports a wheelchair chassis and accommodates movements encountered during travel. In one aspect of this embodiment, a suspension member of the base suspension defines a proximal end and a distal end. The proximal end is attached to one of a frame or a caster arm of the power wheelchair, and the distal end is attached to the other of the frame or the caster arm. An inertia head of the suspension member is supported in one of the proximal or distal ends. The inertia head has an electromagnet assembly including a coil and a driven disk connected to a sprag clutch. A linear-to-rotational motion transform mechanism acts between the proximal end and the distal end in response to relative movement between the frame and the caster arm. The linear-to-rotational transform mechanism engages the sprag clutch such that movement of the caster arm in a first direction causes rotational movement of the driven disk in a first rotational direction. Movement of the caster arm in a second direction bypasses rotational movement of the driven disk in a second rotational direction.

In certain embodiments of the power wheelchair suspension member, the linear-to-rotational transform mechanism is a recirculating nut and ball screw assembly. In one aspect, the recirculating nut is attached to an inner sleeve forming part of the distal end. The ball screw assembly includes an inertia mount section that engages the sprag clutch. The inertia head includes an actuator plate that moves a first friction plate into contact with the driven disk in response to a command signal energizing the electromagnet assembly such that movement of the caster arm is stopped in the first direction and permitted in the second direction. The command signal is initiated by one of a sensor or a switch mounted to one of the frame or the caster arm of the power wheelchair. In certain aspects, the driven disk contacts a second friction plate along with contacting the first friction plate.

In one embodiment of the power wheelchair suspension, a suspension member of the base suspension defines a proximal end and a distal end. The proximal end is attached to one of a frame or a caster arm of the power wheelchair, and the distal end is attached to the other of the frame or the caster arm. An inertia head of the suspension member is supported in one of the proximal or distal ends. The inertia head has an electromagnet assembly including a coil and a driven disk connected to a sprag clutch. A ball screw assembly rotates within an outer sleeve extending from the inertia head. The outer sleeve telescopes relative to the inner sleeve in response to movement of the caster arm. A resilient member extends between the distal end and the proximal end. The inertia head includes an actuator plate that moves a first friction plate into contact with the driven disk. The driven disk contacts a second friction plate along with contacting the first friction plate in response to a command signal initiated by one of a sensor or a switch mounted to one of the frame or the caster arm of the power wheelchair. The command signal energizes the electromagnet assembly such that movement of the caster arm is stopped in the first direction and permitted in the second direction.

In yet another embodiment, a power wheelchair chassis comprises a base, a seat, one of a switch or a sensor, and a suspension member. The base has a frame and at least a front caster arm and a rear caster arm pivotally connected to the frame. The seat is mounted to the base and includes a backrest. The switch or sensor detects relative movement between one of the front or rear caster arms and generates an output signal related to the relative movement. The suspension member is connected to one of the front or rear caster arms and includes a ball screw and recirculating nut. The recirculating nut transforms a linear motion component of the caster arm into a rotational motion of the ball screw. The ball screw engages a sprag clutch such that movement of the front or rear caster arm relative to the frame is stopped in the first direction and permitted in the second direction in response to the output signal.

In an aspect of this embodiment, the sprag clutch is connected to a driven disk that is selectively engaged by a friction plate in response to the output signal. In the absence of an output signal, movement of the front or the rear caster arm causes rotational movement of the ball screw, sprag clutch, and driven disk in a first direction and opposite rotational movement of the ball screw alone in a second direction. An electromagnet assembly is responsive to the output signal and causes the friction plate to contact the driven disk. In yet another aspect of this embodiment, the sensor is mounted to one of the base or the backrest and is responsive to motion of the backrest to generate the output signal. In certain aspects, the sensor may be one of a gyroscope, an accelerometer, an inclinometer, or a magnetometer mounted to the backrest. One feature includes the output signal being proportional to movement of the backrest. In embodiments where the sensor is mounted to the backrest, the sensor detects at least a forward user weight shift. A controller generates and sends a command signal to the suspension member in response to the output signal. The command signal causes an electromagnet assembly to selectively engage the friction plate with the driven disk connected to the sprag clutch. In certain aspects, the controller generates the command signal when a forward leaning slope is greater than a predetermined threshold amount. The command signal creates an engagement between the friction disk and the driven disk that is proportional to the output signal.

Various aspects of this invention will become apparent to those skilled in the art from the following detailed description of the preferred embodiment, when read in light of the accompanying drawings.

### BRIEF DESCRIPTION OF THE DRAWINGS

- Figure 1: is an elevation view of a power driven wheelchair.
- Figure 2 A: is a perspective view of the power driven wheelchair base of Figure 1 having a motor, gearbox and suspension assembly.
- Figure 2B: is a perspective view of a seat assembly of the power driven wheelchair of Figure 1.
- Figure 2C: is an enlarged rear perspective view of a portion of the seat assembly of Figure 2B.
- Figure 3A: Is an enlarged view of the seat assembly of Figure 2C.
- Figure 3B: is a schematic illustration of a portion of a wiring harness of the power driven wheelchair of Figure 1.
- Figure 4: is a perspective view of a portion of the power driven wheelchair base of Figure 2 A with a drive wheel removed and showing a drive wheel powertrain and suspension in accordance with the invention.
- Figure 5A: is a cross sectional view of a power driven wheelchair suspension element of Figure 4.
- Figure 5B: is an enlarged view of an inertia dampening head of the power driven wheelchair suspension element of Figure 5A.
- Figure 6A: is an exploded view of the power driven wheelchair suspension element of Figure 5A in accordance with the invention.
- Figure 6B: is an exploded view of the inertia dampening head of Figure 5B.
- Figure 7: is an enlarged view of the inertia dampening head of Figure 5B.
- Figure 8: is an exploded, perspective view of a power wheelchair chassis in accordance with the invention.
- Figure 9: is a perspective view of a motor, gearbox and suspension assembly of the power wheelchair chassis of Figure 8.
- Figure 10: is an enlarged view, in cross section, of the motor, gearbox and suspension of the power wheelchair chassis of Figure 9.
- Figure 11: is another enlarged view, in cross section, of the motor, gearbox and suspension of the power wheelchair chassis of Figure 9.

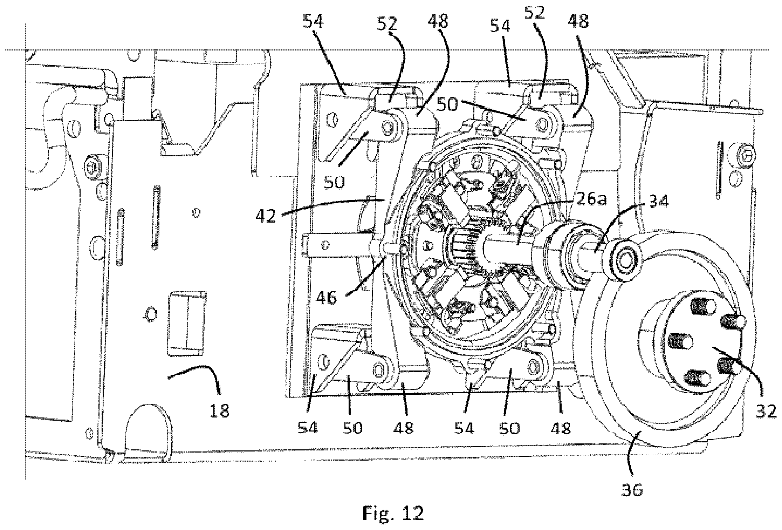

- Figure 12: is an enlarged perspective view of a portion of the motor, gearbox, and suspension assembly of Figure 8 with outer housings removed.

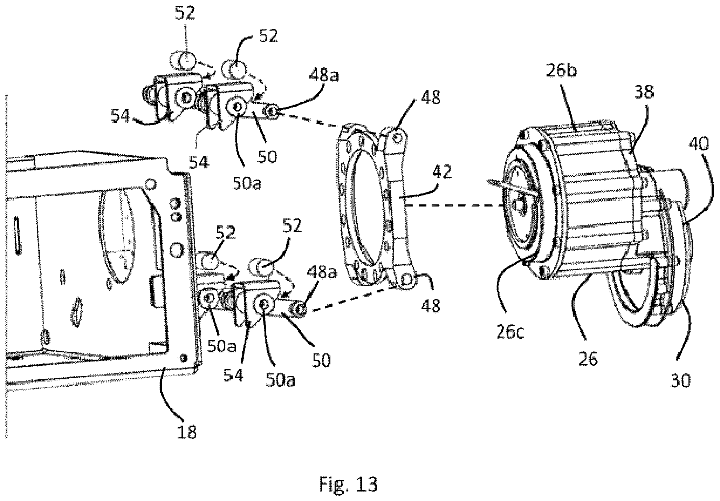

- Figure 13: is an exploded view of the motor, gearbox, and suspension assembly of Figure 1.
- Figure 14A: is an exploded view of an alternative embodiment of a motor, gearbox and suspension of the power wheelchair chassis.
- Figure 14B: is an assembled view of the embodiment of Figure 14 A.
- Figure 15: is a flow chart of a suspension control architecture.
- Figure 16A-16F: are flow charts of control steps of a method for suspension operation.
- Figure 17A-17C: are flow charts of a suspension control strategy using drive control and sensor inputs to determine suspension state.

### DETAILED DESCRIPTION OF THE PREFERRED EMBODIMENT

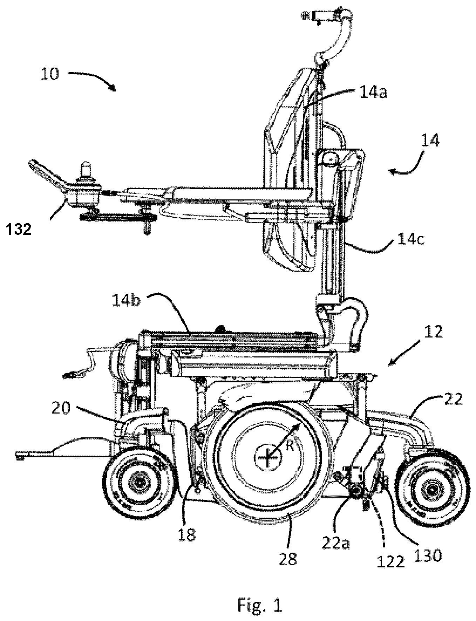

Referring now to the drawings, there is illustrated in Figure 1 a power driven wheelchair, shown generally at 10. While the power driven wheelchair 10 is illustrated as a mid- wheel drive wheelchair, the various embodiments of suspension control, powertrain and powertrain suspension, and suspension damper elements described herein may be used in any combination and for any wheelchair drive layout, such as front wheel drive, rear wheel drive, or all-wheel drive wheelchairs. The power driven wheelchair 10 includes a base 12 and a seating assembly 14. The base 12 is illustrated as a mid- wheel drive power base, though other base configurations may be used. The base 12 includes a motor and gearbox powertrain, shown generally at 16 suspended from a frame 18. The frame 18 may be configured as a closed structure, such as a battery box, that supports the powertrain along with front and rear caster arm assemblies 20 and 22, respectively. In certain embodiments, the front and rear caster arm assemblies may be interconnected for coordinated movement by a caster arm linkage 24 acting between the front and rear caster arms. Non-limiting examples of such a linkage arrangement may be configured as described in US 7,896,394, US 8,113,531, or as utilized in the Sunrise Medical Quickie Q700, M700, or Pulse mid- wheel drive wheelchair products. Alternative configurations that coordinate movement of one caster arm with a range of movement of another caster arm may be used. Alternatively, the front and rear cast arms may be independently operated with respect to each other.

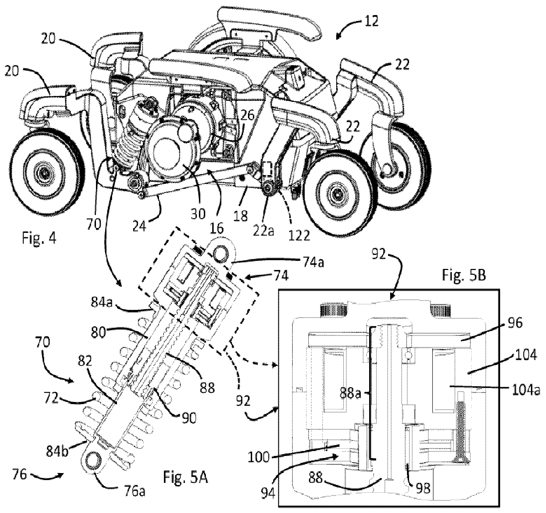

As shown in Figure 4, the motor and gearbox powertrain 16 includes an electric motor 26, which may be any type of electric motor and in a preferred embodiment a DC electric or DC 4-pole electric motor. In one embodiment, the motor 26 is sized to package within the inner portion of a drive wheel 28, shown as a distance R from the wheel centerline. The motor 26 is offset from the wheel centerline and a gearbox 30 includes a drive hub 32 that is coaxially oriented with the wheel centerline. This motor and gearbox package fitting within the rim diameter of the drive wheel 28 permits the wheel to be mounted close to the frame 18. This arrangement permits a wheel track dimension to be made narrower than conventional worm-drive units in order to increase maneuverability, particularly in tight, space-confined places such as doorways and indoor areas. The gearbox 30 may be a single gear ratio or alternatively may be a shiftable geartrain or planetary gearset permitting multiple gear ratios to be utilized during operation. The illustrated gearbox 30 includes a drive pinion 34 mounted on a motor output shaft 26a and a wheel drive gear 36, engaged by the pinion 34 and driving the hub 32.

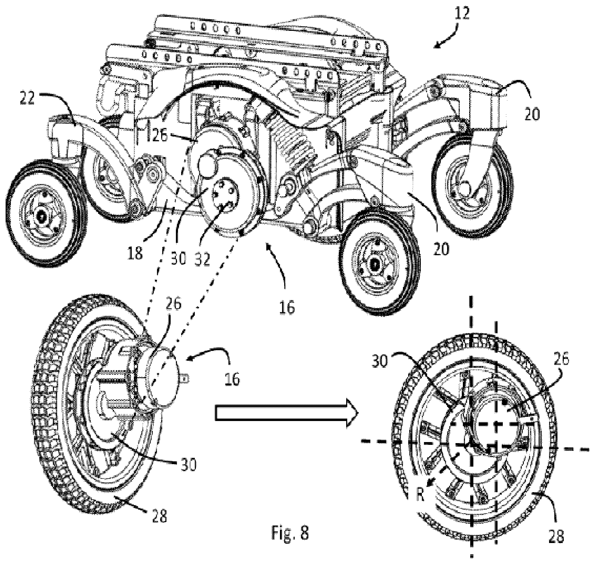

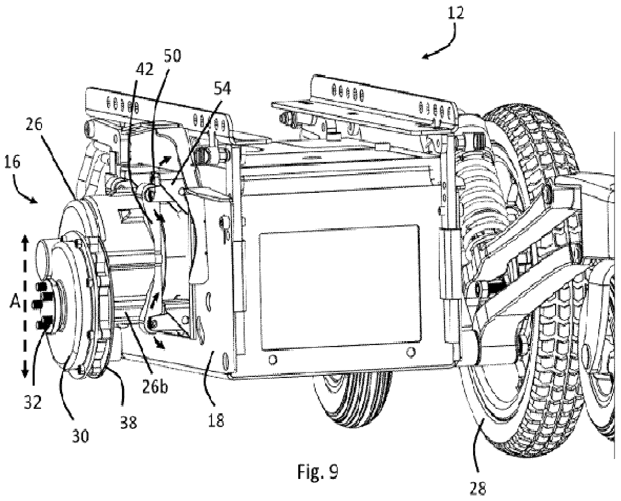

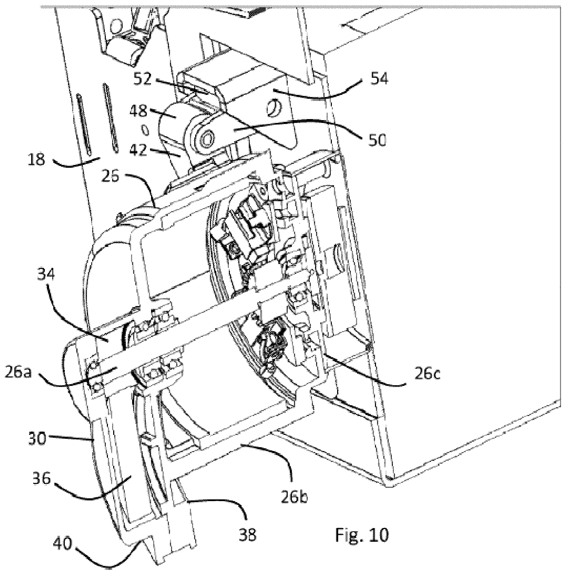

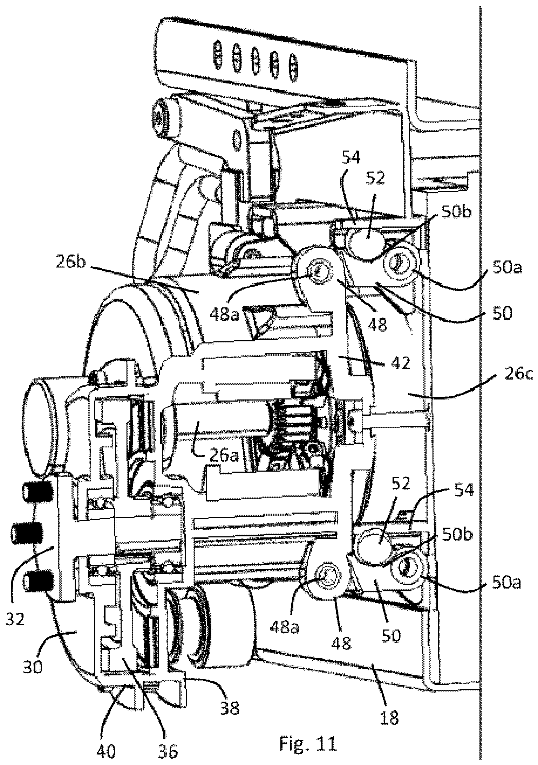

Referring now to Figures 8-11, the motor 26 and gearbox 30 may include a common housing 38 that is sealed by a front gearcase cover 40 and a motor housing 26b. A motor end cap 26c, which may support motor components such as brushes may connect to or be integrally formed with the motor housing 26b. A powertrain mount 42 attaches to the motor 26 and the frame 18. The common housing 38 may include a bearing cavity 44 that houses bearings or bushings of any desired configuration, to support the motor output shaft 26a and drive pinion 34. The common housing 38 may be attached to or integrally formed with the motor housing 26b that surrounds the rotating motor components and supports the motor stator components. The illustrated powertrain mount 42 includes a support flange 46 that attaches to the motor housing 26b and end cap 26c and includes suspension tabs or ears 48 that extend in opposite directions and may be vertically oriented. The suspension tabs 48 support upper and lower suspension links 50 for rotation or pivoting movement in a four-bar arrangement relative to the frame 18, which forms the ground link of the 4-bar linkage arrangement. The suspension tabs 48 may include pivot bushings 48a and the suspension links 50 may include pivot bushings 50a that may include isolation material, such as rubber, urethane, or other elastomeric materials to provide vibration isolation.

The upper and lower links 50 include a barrel seat or mount 50b that supports and contains a resilient member 52, illustrated as a cylindrical elastomeric member that may be solid, slotted, fluid- or gel-filled, or a pressurized fluid or air container.

Alternatively, the resilient member 52 may be a spring or spring/damper element, either linearly or rotationally actuated and connected between the frame and the link. A mounting bracket 54 is fixed to the frame 18 and captures the resilient member 52 against the barrel seat 50b. As the drive wheel encounters an obstacle, the drive wheel and powertrain 16 move in a generally vertical direction as shown by arrow A, in conjunction with a small horizontal component associated with the arcuate movement of the 4-bar mechanism. The powertrain mount 42 pivots at the suspension tabs 48 relative to the upper and lower links 50. The upper and lower links 50 pivot relative to the mounting brackets 54.

As the drive wheel 28 and powertrain 16 move in response to an obstacle, the links 50 pivot and the resilient member 52 compresses between the barrel seat 50b and the mounting bracket 54. The resilient member 52 is illustrated in a rubber-in-compression load orientation that provides an increasing spring rate through the deflection range. The resilient member 52 may alternatively be configured as a rubber-in-shear oriented elastomeric member which provides a generally constant spring rate over the suspension deflection range. The resilient member 52 is configured to maintain a sialic ride height and accommodate jounce and rebound movements of the powertrain mount 42 and suspension links 50. The 4-bar or 4-link suspension directs torque reactions of the powertrain 16 to the frame 18 and provides generally compliant movement in response to obstacles and generally rigid or less-compliant movement in response to motor torque reactions. The solid reaction of the stiffer connection between the frame, suspension, and powertrain when motor torque is applied increases power transfer efficiency since energy is not used to deflect a secondary motor suspension. Thus, the torque transfer from the drive wheel to the pavement is firmer and more direct than in conventional mid-wheel-drive motor mount arrangements, which often have extra damper elements to control motor torque reactions. Alternatively, the four 4-bar links may be provided as two swing arm links (not shown) fixed to a powertrain mount, similar to powertrain mount 42, and pivotally attached to the frame 18. A conventional spring or coil and shock absorber react to movement from the powertrain mount and transmit forces to the frame.

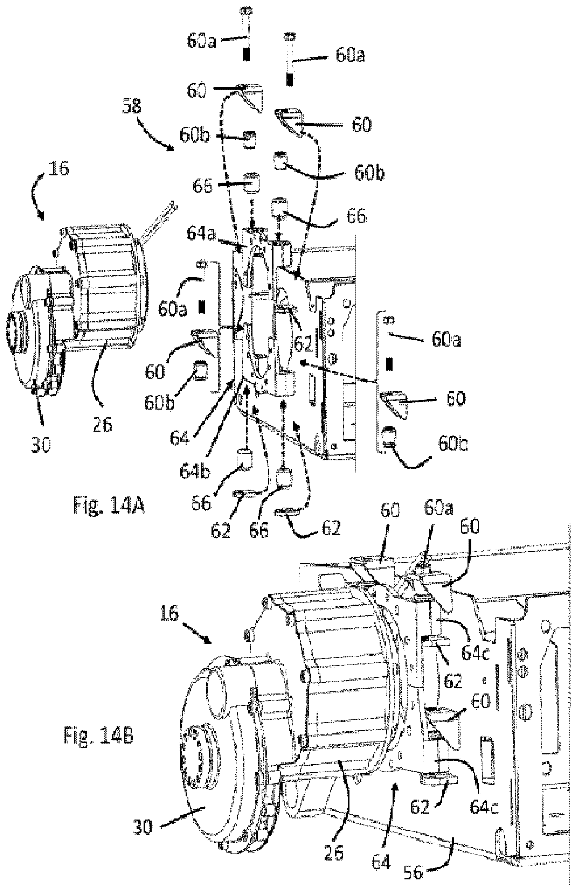

An alternative suspension layout for the wheelchair powertrain is shown in Figures 14A and 14B. In the illustrated embodiment, the wheelchair powertrain 16, comprising the motor 26 and the gearbox 30, is suspended on a frame 56, similar to frame 18, by a powertrain suspension system, shown generally at 58. The suspension system 58 is supported for linear movement of the powertrain 16 relative to the frame 56. The suspension system 58 includes upper and lower suspension tabs 60 and 62, respectively, secured to the frame 56, as shown in Figure 14B. The upper suspension tabs 60 are illustrated as gusseted structures, similar to mounting brackets 54 described above, that support a majority of the applied loads from the frame and suspension. The lower suspension tabs 62 provide load stability and can be threaded to receive suspension rods, illustrated as bolts 60a. Upper suspension resilient members 60b provide support and suspension reactions to loads applied during jounce and rebound excursions. The members 60b may be rubber-in- shear bushings with either convolutes, bellows designs, or fluid- filled chambers or may be rubber-in-compression elements that compress and expand radially during loading.

A powertrain mount 64 attaches to the motor 26, similar to powertrain mount 42, described above. The powertrain mount 64 is illustrated having upper and lower mount halves 64a and 64b, though a single-piece powertrain mount 64 may be provided. The powertrain mount 64 includes bushing housings 64c that include slide bushings 66. The slide bushings 62 may be hard and stiff or compliant, and provide a reduced friction interface between the powertrain mount 64 and suspension rods 60a. The slide bushings 66 support the bottom of the resilient suspension members 60b and the upper tabs 60 capture the top of the member 60b. In an alternative embodiment, spring/damper assemblies may replace the resilient members 60b and slide bushings 66. During operation as the drive wheel encounters an obstacle, the powertrain 16 and the powertrain mount 64 move linearly, shown in a generally vertical direction. The resilient members 60b compress against the loads imposed by the obstacle and the slide bushings 66 move along the suspension rods 60a with the powertrain mount 64.

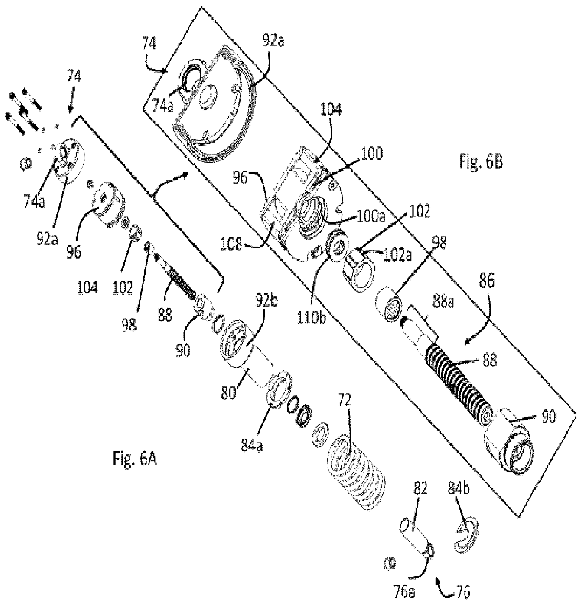

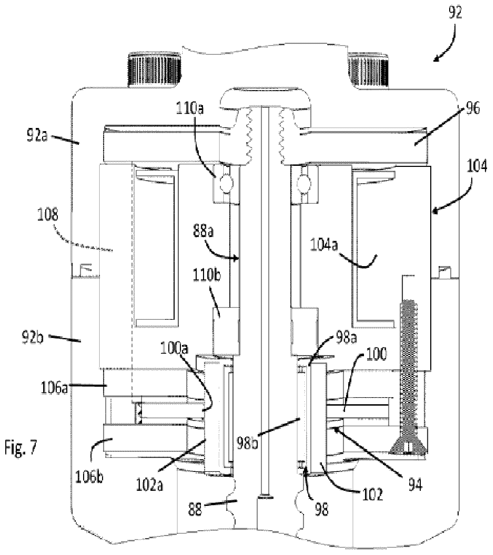

Referring now to Figures 4-7, there is illustrated a suspension member in accordance with the present invenin, shown generally at 70. The suspension member 70 is configured as an inertia dampened shock absorber having a resilient member 72 illustrated as a coil spring, though alternative resilient members such as elastomeric bushings, or other flexible elements may be used. The suspension member 70 includes a proximal end 74 having an upper mount 74a that may, for example, attach to frame 18. A distal end 76 includes a lower mount 76a that may attach to a moving structure, such as front caster arm 20 or rear caster arm 22. A center section 78 includes an outer sleeve 80, illustrated extending from the proximal end 74, and an inner sleeve 82, illustrated extending from the distal end 76, that telescopes relative to the outer sleeve. Upper and lower spring seats 84a and 84b are attached to the proximal and distal ends, illustrated attached to the outer and inner sleeves, to locate and transfer articulation loads to the resilient member 72. In certain embodiments, the spring seats 84a, b may be adjustable to alter suspension characteristics, such as spring preload.

A linear-to-rotational motion transform mechanism 86, illustrated as a ball screw 88 and recirculating nut 90 assembly, extends between the proximal and distal ends 74 and 76. Though illustrated as a ball screw and recirculating nut, the motion transform mechanism 86 may configured as any type of structure that can accept linear motion inputs and create rotational motion outputs, or vice versa. As illustrated in Figure 5A, the recirculating nut 90 is attached to the inner sleeve 82 and the ball screw 88 extends through the outer sleeve and engages an inertia head 92. Alternatively, the ball screw may extend from the distal end 76, attached to the caster arm, and the recirculating nut 90 may be attached to a sprag clutch and driven disk assembly within an inertia head, as described below. In one embodiment, the nut 90 is fixed to the inner sleeve 82 and the ball screw 88 is free to screw into and out of (rotate and translate) the nut. Alternatively, the nut 90 may be constrained by the sprag clutch 102 and the thrust bearings 110b. The ball screw 88 would then be fixed to the inner sleeve 82 and the linear movement of the ball screw 88 thru the nut 90 would perform the linear to rotational motion. The ball screw 88 includes an inertia mount section 88a that extends into the inertia head 92 and engages an inertia disk assembly 94. An actuator plate 96 is housed within the inertia head 92. The inertia disk assembly 94 includes a sprag clutch 98 and a driven disk 100. The sprag clutch 98 may be a completely self-contained assembly, including or excluding the nut 90, or may rely on a portion of the inertia mount section 88a as an inner race structure. An outer race 98a of the sprag clutch 98 may be attached to a driven disk hub 102 or may be integrally formed therewith. The driven disk hub 102 is illustrated having a hexagonal outer profile 102a, or other torque transmitting profile, that engages in a slip-fit arrangement, a bore 100a of the driven disk 100 having a complementary profile. A plurality of sprag elements 98b extend around the outer race 98a and the inertia mount section 88a, or alternatively around the outer surface of the nut 90, for selective engagement therebetween. Alternatively, the sprag clutch 98 may be a conventional sprag with inner and outer races that is attached to the inertial mount section 88a and the driven disk 100. The sprag clutch 98 or hub 102 engages the driven disk 100. The sprag clutch operates to permit rotation of driven disk 100 in one direction and permit free rotation of the ball screw 88 relative to the driven disk 100 in the other direction.

The inertia head 92 includes an electromagnet assembly 104 selectively energized by an electric coil 104a. The actuator plate 96 is located on one side of the electromagnet assembly 104 and a first friction disk 106a is located on the opposite side. One or more actuator shafts 108 extend through the electromagnet assembly 104 and connect between the actuator plate 96 and the first friction disk 106a. The driven disk 100 is interposed between the first friction disk or plate 106a and a second friction disk or plate 106b. There is a free space illustrated between the actuator plate and the electromagnet assembly to permit the actuator plate 96 to move the first friction plate 106a into contact with the driven disk 100 and the second friction plate 106b . The electromagnet assembly is located in an inertia head housing having an upper portion 92a and a lower portion 92b. In the illustrated embodiment, the upper portion 92a of the housing forms part of the proximal end 74 and the lower portion 92b is integrally formed with the outer sleeve 80, though such is not required. Bearing elements 110a and 110b are illustrated as mounted between the electromagnet assembly 104 and the inertia mount section 88a. In the illustrated embodiment, bearing 110a is a ball bearing and bearing 110b is a thrust bearing, though any suitable bearing construction may be used.

In operation, as the caster arms react to terrain irregularities, the movement of the inner sleeve 82 causes the nut 90 to move against the ball screw 88. The linear motion of the nut rotates the ball screw. Conversely, the nut 90 when incorporated into the inertia head may be fixed between bearing 110b and sprag clutch 98, and the ball screw linear movement driven by the distal end 76 will cause the nut to rotate. The rotation of the ball screw (or nut based on orientation), in turn, rotates the driven disk and sprag clutch in one direction and rotates the ball screw relative to the sprag in the opposite direction. In the embodiment where the inertia dampened shock absorber 70 is mounted between the front caster arm and the frame, upward movement of the front caster arm causes the nut to rotate the ball screw, sprag and driven disk assembly together. Downward movement of the front caster arm causes the nut to rotate the ball screw relative to the sprag in a freewheel or non-engaged condition where the driven disk does not rotate. This operation of free movement downwardly of the caster arm and preventing upward movement of the caster arm prevents the wheelchair from pitching forward when traversing obstacles such as descending a curb. Such operation occurs in response to energizing the electromagnetic coil in the inertia head. Preventing forward pitch motions of the wheelchair provides stability to a seated user. A similar operation applied to the rear caster arm prevents rearward tipping of the seat by permitting the caster arm to limit the rearward rotational movement of the seat.

When electrical energy is supplied to the coil 104a, the actuator plate 96 is drawn to the electromagnet assembly 104. The actuator shafts 108 move the first friction plate 106a into contact with the driven disk 100. The driven disk 100 is then pinched or loaded between the first and second friction plates to slow or stop movement of the driven disk 100 and the nut 90. Stopping movement of the driven disk 100 is configured to prevent rotation of the ball screw 88 and prevent upward movement of the front caster arm. A high frictional load applied to the disk will stop movement of the ball screw in one direction. By modulating the magnetic force created by the electromagnet assembly attracting the actuator plate 96, a dampened response slowing upward progression of the front caster arm can be created. A 24 volt electrical load applied to the electromagnetic assembly may be configured to stop rotation of the driven disk. Lower applied voltages will permit energy dissipation over a longer time to slow dampen the upward motion of caster arms. This permits software and computer control of the suspension to tune the response to simulate a hydraulic damper in normal operation and lock the suspension for large articulation events, such as traversing obstacles. In one embodiment, the control of the inertia dampened shock absorber 70 may be directed to front or rear units as groups, left side and right side units as groups, or controlling each unit individually.

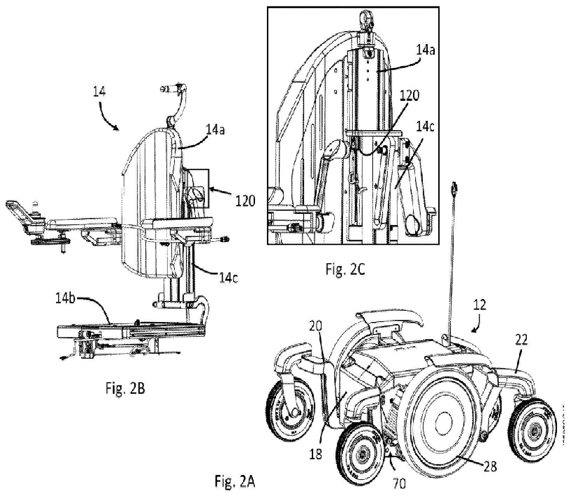

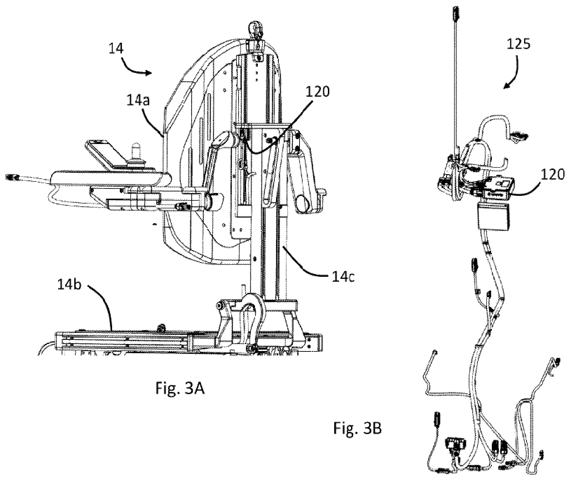

Referring now to Figures 2B-3B and 15-17C, flow diagrams describe an embodiment of a suspension control system that accepts sensor inputs and calculates suspension control outputs to modulate the performance of wheelchair suspensions in response to terrain initiated inputs or anticipatory user command inputs.

In one embodiment, the seating assembly 14 includes a seatback assembly 14a and a seat base 14b attached to the base 12. The seatback and/or seat bast assemblies may include adjustment features, for example, to vary inclination, seat extension, backrest shear, armrest position, and seat size. In the illustrated embodiment, the seatback 14a includes a sensor 120 mounted to a portion of a seatback frame 14c. In one embodiment, the sensor 120 is an accelerometer and may include multi-axis sensing capability to measure forward, lateral, and vertical accelerations along with pitch, yaw, and roll movements. The sensor 120 may be mounted to any suitable location on the wheelchair. In a preferred embodiment, the sensor 120 is mounted on the seatback frame 14c to provide data more directly related to the seated user's ride experience. By using the sensor on the back rest the suspension responses, mechanically transmitted thru the seating system, can be adjusted by varying the rate of suspension lock of the inertia dampened shock absorber 70. This adjustment keeps the user from pitching forward or rearward and/or creating an abrupt change is system attitude or acceleration. The sensor mounted to the backrest may be configured to detect forward weight shifts of the user to stabilize ride characteristics. In certain embodiments, if the backrest sensor detects the seatback, in any seat recline or fore-aft position, measures a downward and forward leaning slope greater than a predetermined threshold amount or degree, the command signal causes the suspension to stiffen to prevent pitching the user forward. The amount of stiffness or resistance/locking of the inertia head may be proportional to the sensor measurement.

Additionally, using the seatback as an inertial frame of reference provides data related to the backrest angle position relative to the ground. This data can be used to control vehicle acceleration levels and suspension inputs to the inertia dampened shock absorber 70 based on backrest position. For example, if the seatback position is reclined beyond a certain level, the vehicle drive and suspension reactions can be slowed to accommodate a more difficult driving position. Furthermore, by mounting the sensor to the seatback, the stiffness of the seating pivots and mounts can be measured and suspension responses adjusted for seat pivot wear over time.

Additional sensors may be provided to detect caster arm position relative to the frame. In one embodiment, a sensor or switch is actuated between the frame and, for example, the rear caster arm 22 to detect a degree of relative movement. The switch may be positioned between the frame 18 and the rear caster arm 22 or mounted to the rear caster arm and acting against the caster arm linkage 24. The switch 122 may be configured as an on-off sensor that detects caster arm movement relative to the frame beyond a predetermined amount. In one example, when the switch 122 is activated by movement of the rear caster arm 22 way from the frame 18 or the linkage 24, the front mounted suspension member 70 may be locked to prevent forward tipping of the base and seat. In another embodiment, the sensor may be an encoder positioned at a pivot point 22a of the rear caster arm 22. The encoder provides data related to the relative position of the rear caster arm and/or the rate of change of the rear caster arm relative to the frame. In yet another embodiment, the switch may be any continuous movement measurement device, such as a potentiometer, laser, inclinometer, or other known sensor, mounted to the frame and/or the rear caster arm to detect relative movement therebetween. The suspension member 70 may be actuated in a varying degree to adjust the forward rate of decent to a predetermined level. The encoder may trigger a locking mode of the suspension member 70 when forward movement exceeds a predetermined amount. In other embodiments, a similar arrangement of sensors may be provided on the front caster arms and a rear mounted suspension member 70 may limit rearward tilt.

The sensors are connected by a wiring harness 125 to a single controller or multiple actuator controllers in order to communicate data and commands between sensors and actuators. A single control unit or controller 130 may output control signals to each suspension member 70. Alternatively, a controller may be individually directed to control each suspension member 70 and coordinate response outputs with a central control unit. In an embodiment of the wheelchair described above, the controller 130 may utilize additional inputs to predict suspension movements and generate suspension member adjustment signals rather than relying on sensors measuring reactions to terrain changes to effect suspension adjustments. One such input device for implementing a predictive control strategy is a joystick 132, as shown in Figure 1. While described in the context of a joystick, user input devices such as sip-and-puff inputs, head array inputs, and/or switched controllers are also contemplated in the scope of this disclosure.

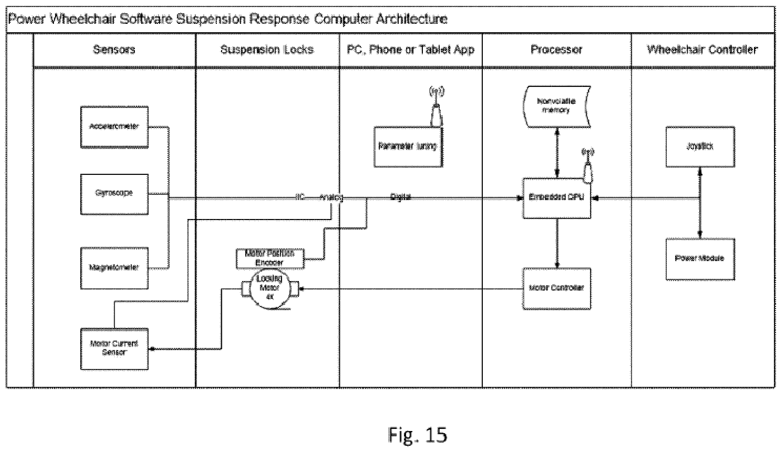

Referring to Figure 15, an overview of inputs and interactions to effect suspension control for a power wheelchair are outlined. Sensors such as accelerometers, which may be single or multi-axis; gyroscopes, including spinning gyros, crystal-based gyros, printed circuit board mounted gyros, or digital interface gyros; magnetometers; and motor current sensors may be inputs to the control logic. Additional sensors and data input sources such as caster angle sensors, LIDAR, RADAR, lane departure protocols, and GPS may also be used. Suspension dampeners (hydraulic, piezoceramic, magneto-or electrorheological, inertial - linear or rotational) having adjustable damping and/or stiffness rates, suspension control motors or magnetic coils which may include suspension locking actuators, and selectively locking spring/dampers are the devices controlled by the control logic to adjust wheelchair dynamics. A central processing unit (CPU) or controller, receives the inputs and may be in communication with devices that permit adjustment or tuning of control parameters. These devices include computers, smartphones, dongles, or other data editing devices. The controller also receives user control inputs to the drive motors from a joystick that are indicative of intended wheelchair operations. In addition, user position and seating position (recline, elevation height, legrest position) may be factored into dynamic suspension adjustments.

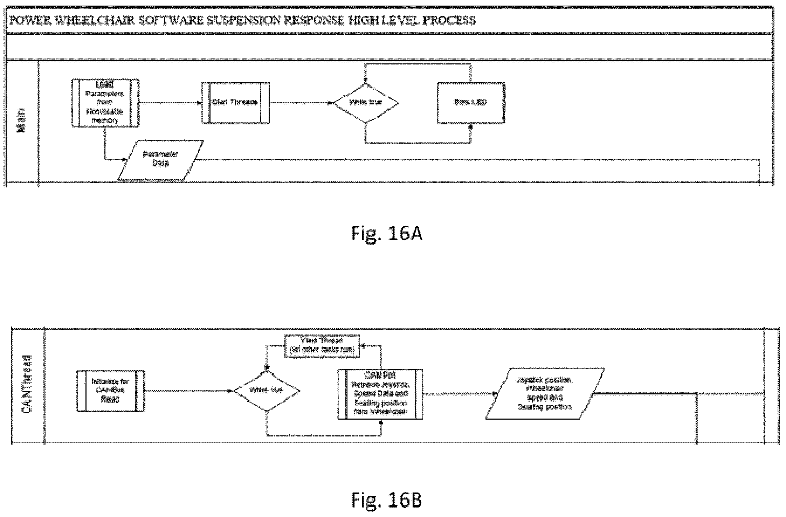

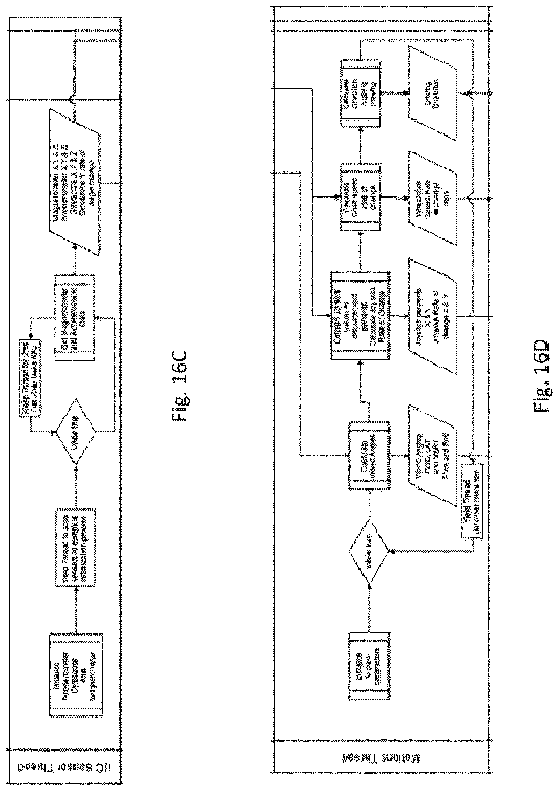

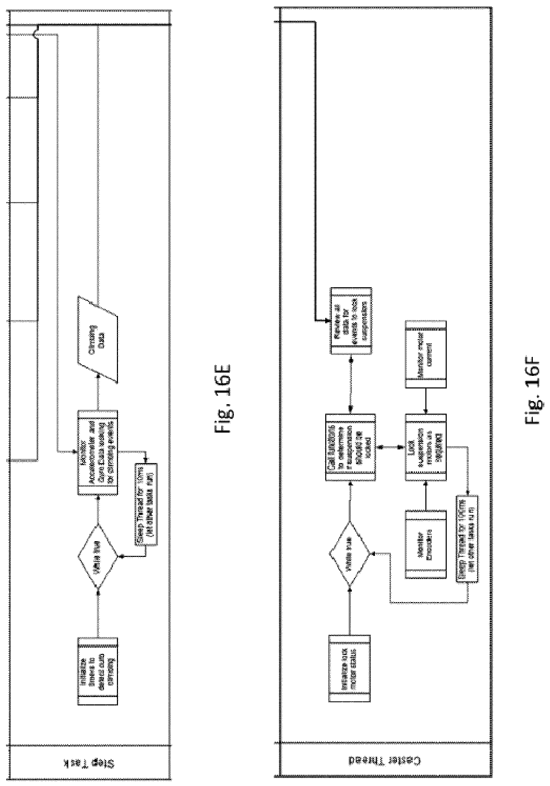

Figures 16A-16F describe steps taken in the controller to implement the suspension control logic. These steps include initializing sensors and suspension controllers, timers tied to specific wheelchair operation events, such as curb climbing, that utilize suspension locking or rate change operations. Accelerometer and/or gyroscope data provides one window to view current wheelchair dynamics. Current joystick position measured against motor output provides another data point of current wheelchair dynamics. Measuring the rate of change of the joystick movement and the specific command quadrants - right turn, left turn, forward, reverse - provides an indication of the user' s intended maneuver as a prediction of the next wheelchair dynamic event. The operational lag time between the command input and the motor output is a temporal window to determine suspension characteristics before an event is measured by a sensor. In one example, a suspension lock event may be created when sensed wheelchair dynamics and user inputs signal an upcoming event such as slowing and stopping to overcome a curb or descend from a curb to another surface. The reference of a curb is not limited to a particular structure but provides suitable imagery of an obstacle impeding steady-state operation. Other non-limiting events impacting wheelchair dynamics are cornering maneuvers, particularly at higher operating speeds, and stopping or forward-to-re verse (or visa versa) maneuvers.

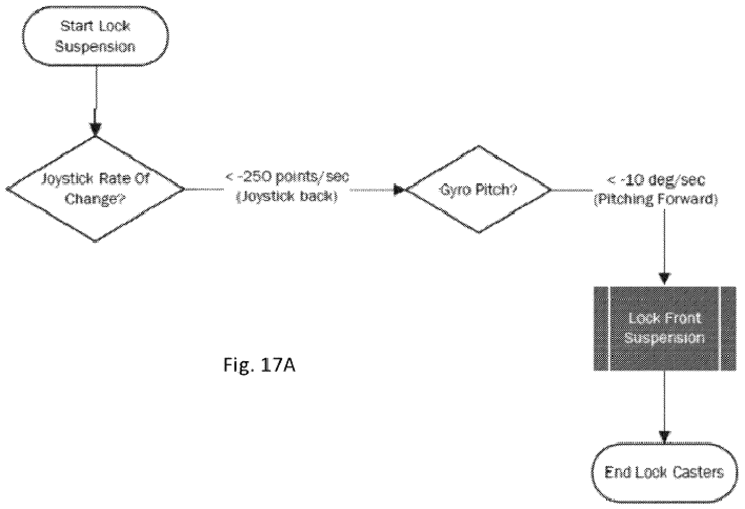

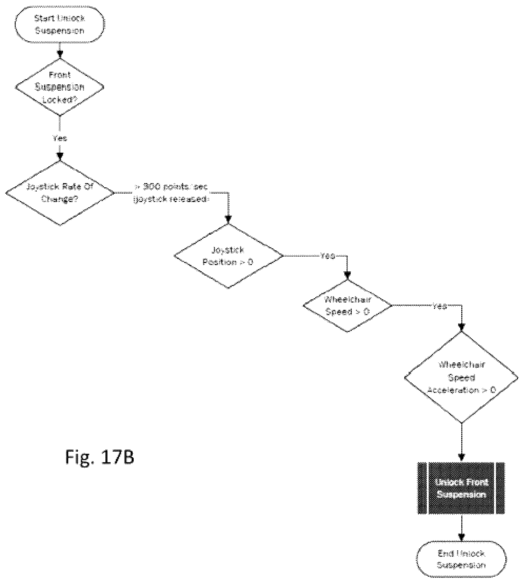

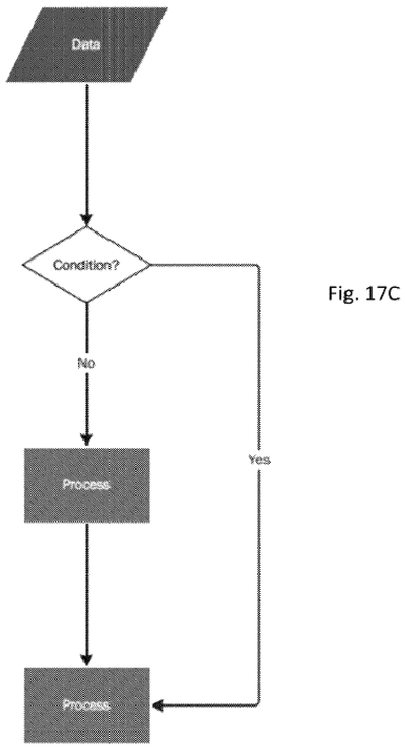

Figures 17A-17C illustrate a suspension control sequence utilizing joystick command data to interpret anticipated user commands from articulation rates of the input device. Joystick rate data is then compared to sensor data to separate intentional commands from inadvertent movements or user induced reactions, such as tremor reactions. For example, when approaching and obstacle such as a curb, if the rate of change of the joystick position is -250 points or less per second (absolute value of 250 points/ second or greater), this signals an intended slowing of forward movement. A confirmatory query of a sensor, such as a gyroscope, determines if the movement is intentional or a transitory action. In the illustrated example, a confirming sensor output of a deceleration event which measures a forward tipping inclination rate of -10 degrees/second or less (absolute value of 10 degrees/second or greater) cause the controller to initiate a suspension lock sequence to arrest forward tipping motion and maintain the user's seat position relative to the ground at the instance of actuation. In another predictive sequence, once the user approaches the obstacle and has slowed forward motion to initiate a climbing maneuver, the controller may initiate a suspension unlock sequence. For example, a measured joystick position rate of change of greater than 300 points/second corresponds to the user releasing the joystick and the joystick returning to the neutral position. If the joystick release rate indicates the user has let go of the device, sensors monitoring wheel speed confirm the wheelchair speed. If the wheelchair has stopped, the suspension unlock event can be initiated. As shown in Figure 17C, the general assessment of user intention and confirmation takes sources of input data and determines the condition and if the condition is met. If the condition is not met, a subsequent evaluation process is initiated prior to moving forward to the actuation process.

The principle and mode of operation of this invention have been explained and illustrated in its preferred embodiment. However, it must be understood that this invention may be practiced otherwise than as specifically explained and illustrated without departing from its spirit or scope.

### REFERENCE SIGNS

- 10: wheelchair
- 12: base
- 14: seating assembly
- 14a: seatback assembly
- 14b: seat base
- 14c: seatback frame
- 16: motor and gearbox powertrain
- 18: frame
- 20: front caster arm
- 22: rear caster arm
- 22a: rear caster arm pivot point
- 24: caster arm linkage
- 26: electric motor
- 26a: motor output shaft
- 26b: motor housing
- 26c: motor end cap
- 28: drive wheel
- 30: gearbox
- 32: drive hub
- 34: drive pinion
- 36: wheel drive gear
- 38: common housing
- 40: front gearcase cover
- 42: powertrain mount
- 44: bearing cavity
- 46: support flange
- 48: suspension tabs
- 48a: pivot bushings
- 50: suspension links
- 50a: pivot bushings
- 52: resilient member
- 54: mounting brackets
- 56: frame
- 58: powertrain suspension system
- 60: upper suspension tabs
- 60a: suspension rods
- 60b: resilient members
- 62: lower suspension tabs
- 64: powertrain mount
- 64a: upper mount halve
- 64b: lower mount halve
- 64c: bushing housings
- 66: slide bushings
- 70: suspension member
- 72: resilient member
- 74: proximal end
- 74a: upper mount
- 76: distal end
- 76a: lower mount
- 78: center section
- 80: outer sleeve
- 82: inner sleeve
- 84a: upper spring seat
- 84b: lower spring seat
- 86: motion transform mechanism
- 88: ball screw
- 88a: inertia mount sect
- 90: recirculating nut
- 92: inertia head
- 92a: upper portion
- 92b: lower portion
- 94: inertia disk assembly
- 96: actuator plate
- 98: sprag clutch
- 98a: outer race
- 98b: sprag elements
- 100: driven disk
- 100a: bore
- 102: sprag clutch
- 102a: outer profile
- 104: electromagnet assembly
- 104a: electric coil
- 106a: first friction disk or plate
- 106b: second friction disk or plate
- 108: actuator shaft
- 110a: bearing element
- 110b: bearing element
- 120: sensor
- 122: switch
- 130: controller
- 132: joystick

## Claims

1. A suspension member (70) for a power wheelchair (10), comprising:
a proximal end (74) configured to be attached to one of a frame (18) or a caster arm (20, 22) of the power wheelchair (10) and a distal end (76) configured to be attached to the other of the frame (18) or the caster arm (20, 22);
an inertia head (92) supported in one of the proximal or distal ends (74, 76), the inertia head (92) having an electromagnet assembly (104) including a coil (104a), and a driven disk (100) connected to a sprag clutch (98);
a linear-to-rotational motion transform mechanism (86) acting between the proximal end (74) and the distal end (76) in response to relative movement between the frame (18) and the caster arm (20, 22), the linear-to-rotational transform mechanism (86) engaging the sprag clutch (98) such that movement of the caster arm (20, 22) in a first direction causes rotational movement of the driven disk (100) in a first rotational direction and movement of the caster arm (20, 22) in a second direction bypasses rotational movement of the driven disk (100) in a second rotational direction.

2. The suspension member of claim 1, wherein the linear-to-rotational transform mechanism (86) is a recirculating nut (90) and ball screw (88) assembly.

3. The suspension member of claim 2, wherein the recirculating nut (90) is attached to an inner sleeve (82) forming part of the distal end (76) and the ball screw (88) assembly includes an inertia mount section (88a) that engages the sprag clutch (98).

4. The suspension member of any one of the preceding claims, wherein the inertia head (92) includes an actuator plate (96) that moves a first friction plate (106a) into contact with the driven disk (100) in response to a command signal energizing the electromagnet assembly (104) such that movement of the caster arm (20, 22) is stopped in the first direction and permitted in the second direction.

5. The suspension member of claim 4, wherein the command signal is initiated by one of a sensor (120) or a switch mounted to one of the frame (18) or the caster arm (20, 22) of the power wheelchair (10).

6. The suspension member of claim 4 or 5, wherein the driven disk (100) contacts a second friction plate (106b) along with contacting the first friction plate (106a).

7. The suspension member of claim 6, wherein the ball screw (88) assembly rotates within an outer sleeve (80) extending from the inertia head (92), the outer sleeve (80) telescopes relative to the inner sleeve (82) in response to movement of the caster arm (20, 22);
a resilient member (72) extends between the distal end (76) and the proximal end (74); and
the inertia head (92) includes an actuator plate (96) that moves the first friction plate (106a) into contact with the driven disk (100) and the driven disk (100) contacts the second friction plate (106b) along with contacting the first friction plate (106a) in response to a command signal initiated by the one of the sensor (120) or switch mounted to one of the frame (18) or the caster arm (20, 22) of the power wheelchair (10), the command signal energizing the electromagnet assembly (104) such that movement of the caster arm (20, 22) is stopped in the first direction and permitted in the second direction.

8. A power wheelchair chassis comprising:
a base (12) having a frame (18) and at least a front caster arm (20) and a rear caster arm (22) pivotally connected to the frame (18);
a seat mounted to the base (12), the seat having a backrest;
one of a sensor (120) or a switch configured to detect relative movement between one of the front or rear caster arms (20, 22) and generate an output signal related to the relative movement;
a suspension member (70) connected to one of the front or rear caster arms (20, 22), the suspension member (70) including a ball screw (88) and recirculating nut (90), the recirculating nut (90) configured to transform a linear motion component of the caster arm (20, 22) into a rotational motion of the ball screw (88), the ball screw (88) engaging a sprag clutch (98) such that movement of the front or rear caster arm (20, 22) relative to the frame (18) is stopped in the first direction and permitted in the second direction in response to the output signal.

9. The power wheelchair chassis of claim 8, wherein the sprag clutch (98) is connected to a driven disk (100), the driven disk (100) selectively engaged by a friction plate (106a, 106b) in response to the output signal.

10. The power wheelchair chassis of claim 9, wherein in the absence of an output signal, movement of the front or the rear caster arm (20, 22) causes rotational movement of the ball screw (88), sprag clutch (98), and driven disk (100) in a first direction and opposite rotational movement of the ball screw (88) alone in a second direction.

11. The power wheelchair chassis of claim 9 or 10, wherein an electromagnet assembly (104) is responsive to the output signal and causes the friction plate (106a, 106b) to contact the driven disk (100).

12. The power wheelchair chassis of any one of the claims 8 to 11, wherein the sensor (120) is mounted to one of the base (14) or the backrest, the sensor (120) responsive to motion of the backrest and generating the output signal.

13. The power wheelchair chassis of claim 12, wherein the sensor (120) is one of a gyroscope, an accelerometer, an inclinometer, or a magnetometer mounted to the backrest, and the output signal is proportional to movement of the backrest.

14. The power wheelchair chassis of claim 13, wherein the sensor (120) is mounted to the backrest and configured to detect at least a forward user weight shift; and a controller (130) configured to generate and send a command signal to the suspension member (70) in response to the output signal that causes the electromagnet assembly (104) to selectively engage the friction plate (106a, 106b) with the driven disk (100) connected to the sprag clutch (98).

15. The power wheelchair chassis of claim 14, wherein the controller (130) generates the command signal when a forward leaning slope is greater than a predetermined threshold amount.

16. The power wheelchair chassis of claim 15, wherein the command signal creates an engagement between the friction disk (106a, 106b) and the driven disk (100) that is proportional to the output signal.
